# EUROPEAN PATENT APPLICATION

(11) **EP 4 694 421 A1**
(43) Date of publication of application: **11.02.2026**
(21) Application number: 23931601.1
(22) Date of filing: 07.04.2023
(51) Int. Cl.: H04W 64/00

(54) **POSITIONING MEASUREMENT METHODS AND APPARATUSES, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2023/087161
(87) International publication number: WO 2024/207542

(57) **Abstract**

The present disclosure relates to positioning measurement methods and apparatuses, and a storage medium. A positioning measurement method comprises: determining a positioning reference signal (PRS) or PRS set for bandwidth aggregation during positioning measurement, so as to improve the transmission opportunity of the PRS after bandwidth aggregation.

## Description

### TECHNICAL FIELD

The disclosure relates to the field of communication technology, and in particular to a positioning measurement method, a related apparatus, a communication device, a communication system, and a storage medium.

### BACKGROUND

**In** the related art, a terminal performs positioning measurement based on a reference signal and reports a measurement result. For example, the positioning measurement is performed based on a positioning reference signal (PRS). A network device communicates with the terminal based on the measurement result.

### SUMMARY

The disclosure provides positioning measurement methods, related apparatuses, communication devices, a communication system, and a storage medium.

According to a first aspect according to embodiments of the disclosure, a positioning measurement method is provided. The method is performed by a terminal. The method includes determining positioning reference signal(s) (PRS) or PRS set(s) for bandwidth aggregation for positioning measurement.

According to a second aspect according to embodiments of the disclosure, a positioning measurement method is provided. The method is performed by a network device. The method includes sending first information, in which the first information is used by a terminal to determine positioning reference signal(s) (PRS) or PRS set(s) for bandwidth aggregation for positioning measurement.

According to a third aspect according to embodiments of the disclosure, a positioning measurement method is provided. The method is performed by a communication system. The method includes sending first information by a network device to a terminal. The first information is used by the terminal to determine positioning reference signal(s) (PRS) or PRS set(s) for bandwidth aggregation for positioning measurement, and determining the PRS(s) or the PRS set(s) for bandwidth aggregation for positioning measurement by the terminal.

According to a fourth aspect according to embodiments of the disclosure, a first positioning measurement device is provided. The device includes a processing module, configured to determine positioning reference signal(s) (PRS) or PRS set(s) for bandwidth aggregation for positioning measurement.

According to a fifth aspect according to embodiments of the disclosure, a second positioning measurement device is provided. The device includes a sending module, sending first information, in which the first information is used by a terminal to determine positioning reference signal(s) (PRS) or PRS set(s) for bandwidth aggregation for positioning measurement.

According to a sixth aspect according to embodiments of the disclosure, a communication device is provided. The communication device includes one or more processors. The one or more processors are configured to invoke instructions to cause the communication device to perform the positioning measurement method according to the first aspect and the second aspect.

According to a seventh aspect according to embodiments of the disclosure, a communication system is provided. The communication system includes a terminal and a network device. The terminal is configured to implement the positioning measurement method according to the first aspect, and the network device is configured to implement the positioning measurement method according to the second aspect.

According to an eighth aspect according to embodiments of the disclosure, a storage medium is provided. The storage medium has instructions stored therein. When the instructions are executed on a communication device, the communication device is caused to perform the positioning measurement method according to the first aspect and the second aspect.

**It** is to be understood that the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1A is a schematic diagram illustrating an architecture of a communication system according to an embodiment of the disclosure.
FIG. 1B is a schematic diagram illustrating a PRS configuration according to an embodiment of the disclosure.
FIG. 1C is a schematic diagram of muted and unmuted signals based on a muting mechanism according to an embodiment of the disclosure.
FIG. 2A is an interactive schematic diagram illustrating a positioning measurement method according to an embodiment of the disclosure.
FIG. 2B is a schematic diagram illustrating a positioning measurement signal according to an example embodiment.
FIG. 3A is a flowchart illustrating a positioning measurement method according to an example embodiment.
FIG. 3B is a flowchart illustrating another positioning measurement method according to an example embodiment.
FIG. 3C is a flowchart illustrating yet another positioning measurement method according to an example embodiment.
FIG. 4A is a flowchart illustrating a positioning measurement method according to an example embodiment.
FIG. 4B is a flowchart illustrating another positioning measurement method according to an example embodiment.
FIG. 4C is a flowchart illustrating yet another positioning measurement method according to an example embodiment.
FIG. 5 is a systematic flowchart illustrating a positioning measurement method according to an example embodiment.
FIG. 6A is a block diagram illustrating a positioning measurement apparatus according to an embodiment of the disclosure.
FIG. 6B is a block diagram illustrating a positioning measurement apparatus according to an embodiment of the disclosure.
FIG. 7 is a block diagram illustrating a positioning measurement device according to an embodiment of the disclosure.
FIG. 8 is a block diagram illustrating a positioning measurement device according to an embodiment of the disclosure.

### DETAILED DESCRIPTION

In a positioning measurement, the terminal performs the positioning measurement based on a PRS or a PRS set, but the measurement accuracy of the positioning measurement based on the PRS or the PRS set is low.

Embodiments of the disclosure provide positioning measurement methods, related apparatus and a storage medium.

In a first aspect, an embodiment of the disclosure provides a positioning measurement method. The method is performed by a terminal. The method includes determining a PRS or a PRS set for a bandwidth aggregation in a positioning measurement.

In the above embodiments, the terminal, by determining the PRS(s) or the PRS set(s) for bandwidth aggregation itself, obtains which PRS or PRS set among PRS(s) or PRS set(s) for bandwidth aggregation may be used for transmission during the positioning measurement, thereby increasing the transmission opportunity for the subsequent transmission of the PRS after the bandwidth aggregation.

In combination with some embodiments of the first aspect, in some embodiments, the method also includes: receiving first information, in which the first information indicates PRS(s) or PRS set(s) expected for bandwidth aggregation; determining the PRS(s) or the PRS set(s) for bandwidth aggregation for positioning measurement includes determining the PRS(s) or the PRS set(s) for bandwidth aggregation for positioning measurement based on the PRS(s) or the PRS set(s) expected for bandwidth aggregation.

In the above embodiment, the terminal may determine the PRS(s) or PRS set(s) that may actually be used for bandwidth aggregation through configuration information sent by a network device among PRS(s) or PRS set(s) being usable for the bandwidth aggregation pre-configured by the network, thereby avoiding the existence of the PRS(s) or the PRS set(s) that cannot be used for the transmission in the PRS(s) or PRS set(s) for bandwidth aggregation pre-configured by the network during a subsequent aggregation.

**In** combination with some embodiments of the first aspect, in some embodiments, determining the PRS(s) or PRS set(s) for bandwidth aggregation for positioning measurement based on the PRS(s) or PRS set(s) expected for bandwidth aggregation includes determining the PRS(s) or the PRS set(s) expected for bandwidth aggregation as the PRS(s) or PRS set(s) for bandwidth aggregation for positioning measurement.

**In** the above embodiments, in a case that the PRSs or the PRS sets for the bandwidth aggregation preconfigured by the network are the PRSs or the PRS sets transmitted normally after the bandwidth aggregation, the terminal determines a method of performing the positioning measurement by the terminal, that is, the PRS(s) or the PRS set(s) expected for bandwidth aggregation are fed back to the network device as the PRS(s) or the PRS set(s) for bandwidth aggregation. The indication information sent by the network device is determined.

**In** combination with some embodiments of the first aspect, in some embodiments, the PRS(s) or the PRS set(s) expected for bandwidth aggregation includes at least one of: muted PRS(s) or muted PRS set(s), dropped PRS(s) or dropped PRS set(s), unmuted PRS(s) or unmuted PRS set(s), or non-dropped PRS(s) or non-dropped PRS set(s). Determining the PRS(s) or the PRS set(s) for bandwidth aggregation for positioning measurement based on the PRS(s) or the PRS set(s) expected for bandwidth aggregation includes: determining at least one of the unmuted PRS(s) or PRS set(s) or the non-dropped PRS(s) or PRS set(s) among the PRS(s) or the PRS set(s) expected for bandwidth aggregation as the PRS(s) or PRS set(s) for bandwidth aggregation for positioning measurement.

**In** the above embodiment, in a case that there is a PRS or a PRS set that cannot be used for the bandwidth aggregation in the PRS(s) or the PRS set(s) for bandwidth aggregation preconfigured by the network, a method of performing the positioning measurement by the terminal is determined. That is, only at least one of the unmuted PRS(s) or PRS set(s) or the non-dropped PRS(s) or PRS set(s) is used as the PRS(s) or PRS set(s) for bandwidth aggregation for positioning measurement, thereby ensuring that the PRSs after the bandwidth aggregation may be used for the transmission and increasing the transmission opportunity of the PRS after the bandwidth aggregation.

**In** combination with some embodiments of the first aspect, in some embodiments, the positioning measurement is performed at a time corresponding to the determined PRS(s) or the determined PRS set(s) for bandwidth aggregation for positioning measurement.

**In** the above embodiment, by performing the positioning measurement at the time when it has been determined that there is the PRS or the PRS set for bandwidth aggregation, it is possible to avoid performing the measurement at the time when the PRS will not be sent, thereby ensuring data validity.

**In** combination with some embodiments of the first aspect, in some embodiments, second information is reported, in which the second information indicates a positioning measurement result of performing the positioning measurement.

**In** the above embodiment, the measurement result may be fed back to the network device based on the second information to implement the feedback of the positioning measurement result.

**In** combination with some embodiments of the first aspect, in some embodiments, the second information indicates PRS(s) or PRS set(s) for bandwidth aggregation for positioning measurement.

**In** the above embodiment, it is determined that the information of selected PRS(s) or selected PRS set(s) for bandwidth aggregation may be obtained based on the second information.

**In** combination with some embodiments of the first aspect, in some embodiments, the second information is configured to indicate positioning frequency layer information. The positioning frequency layer information indicates the PRS(s) or the PRS set(s) for bandwidth aggregation for positioning measurement.

**In** the above embodiment, it is determined that the positioning frequency layer information corresponding to the corresponding measurement result may be obtained based on the second information.

**In** combination with some embodiments of the first aspect, in some embodiments, the second information indicates whether to perform the positioning measurement based on the PRS(s) or the PRS set(s) expected for bandwidth aggregation.

**In** the above embodiment, the information on whether the positioning measurement result is based on the information pre-configured by the network may be fed back to the network device based on the second information, such that the information fed back to the network device is more comprehensive.

**In** combination with some embodiments of the first aspect, in some embodiments, third information is received, in which the third information indicates whether the PRS(s) or the PRS set(s) allows the terminal to perform the bandwidth aggregation for positioning measurement.

**In** the above embodiment, it is determined whether the terminal may independently select the PRS(s) or the PRS set(s) for bandwidth aggregation for positioning measurement through an indication from the network.

**In** combination with some embodiments of the first aspect, in some embodiments, the positioning measurement is not performed upon determining at least one of unmuted PRS(s) or PRS set(s) or non-dropped PRS(s) or PRS set(s) among the PRS(s) or PRS set(s) expected for bandwidth aggregation.

**In** the above embodiment, a response method of the terminal in the positioning measurement for resources that cannot be used for transmitting the PRSs after the bandwidth aggregation in the PRS(s) or the PRS set(s) expected for bandwidth aggregation is determined, that is, not performing the positioning measurement.

**In** combination with some embodiments of the first aspect, in some embodiments, the first information indicates one or more PRS lists, and the one or more PRS lists include the PRS(s) or the PRS set(s) expected for bandwidth aggregation.

**In** the above embodiment, the detailed configuration information corresponding to each TRP is determined based on the network pre-configuration information.

**In** combination with some embodiments of the first aspect, in some embodiments, the first information indicates one or more identifiers, and the PRS(s) or the PRS set(s) expected for bandwidth aggregation have the same identifier.

**In** the above embodiment, it is determined that the network pre-configuration information may indicate representations of pre-configured PRSs or PRS sets, and it is defined that the bandwidth aggregation is performed for only PRSs or PRS sets with the same identifier, such that the expected bandwidth aggregation process is clearer.

**In** a second aspect, an embodiment of the disclosure provides a positioning measurement method. The method is performed by a network device. The method includes sending first information. The first information is used by a terminal to determine PRS(s) or PRS set(s) for bandwidth aggregation for positioning measurement.

**In** the above embodiment, the network device indicates the determined PRS(s) or the determined PRS set(s) to the terminal through the first information and may obtain the positioning measurement result of the PRS(s) or the PRS set(s) expected for bandwidth aggregation from the terminal.

**In** combination with some embodiments of the second aspect, in some embodiments, the first information indicates the PRS(s) or the PRS set(s) expected for bandwidth aggregation. The PRS(s) or the PRS set(s) for bandwidth aggregation for positioning measurement is determined based on the PRS(s) or PRS set(s) expected for bandwidth aggregation.

**In** combination with some embodiments of the second aspect, in some embodiments, the PRS(s) or the PRS set(s) for bandwidth aggregation for positioning measurement is the PRS(s) or the PRS set(s) expected for bandwidth aggregation.

**In** conjunction with some embodiments of the second aspect, in some embodiments, the PRS(s) or the PRS set(s) expected for bandwidth aggregation includes at least one of: muted PRS(s) or muted PRS set(s), dropped PRS(s) or dropped PRS set(s), unmuted PRS(s) or unmuted PRS set(s), and non-dropped PRS(s) or non-dropped PRS set(s).

The PRS(s) or PRS set(s) for bandwidth aggregation for positioning measurement is at least one of non-muted PRS(s) or PRS set(s) or non-dropped PRS(s) or PRS set(s) in the PRS(s) or PRS set(s) expected for bandwidth aggregation.

**In** combination with some embodiments of the second aspect, in some embodiments, the positioning measurement is performed at a time corresponding to the determined PRS(s) or the determined PRS set(s) for bandwidth aggregation for positioning measurement.

**In** combination with some embodiments of the second aspect, in some embodiments, the method further includes: receiving second information, in which the second information indicates a positioning measurement result of performing the positioning measurement.

**In** combination with some embodiments of the second aspect, in some embodiments, the PRS(s) or the PRS set(s) for bandwidth aggregation for positioning measurement.

**In** combination with some embodiments of the second aspect, in some embodiments, the second information is configured to indicate positioning frequency layer information. The positioning frequency layer information indicates the PRS(s) or the PRS set(s) for bandwidth aggregation for positioning measurement.

**In** combination with some embodiments of the second aspect, in some embodiments, the second information indicates whether to the perform positioning measurement based on the PRS(s) or the PRS set(s) expected for bandwidth aggregation.

**In** combination with some embodiments of the second aspect, in some embodiments, the method further includes: receiving third information, in which the third information indicates whether the PRS(s) or the PRS set(s) allows the terminal to perform bandwidth aggregation for positioning measurement.

**In** combination with some embodiments of the second aspect, in some embodiments, the positioning measurement is not performed on determined at least one of the unmuted PRS(s) or PRS set(s) or the non-dropped PRS(s) or PRS set(s) among the PRS(s) or the PRS set(s) expected for bandwidth aggregation.

**In** combination with some embodiments of the second aspect, in some embodiments, the first information is configured to indicate one or more PRS lists. The one or more PRS lists include the PRS(s) or the PRS set(s) expected for bandwidth aggregation.

**In** combination with some embodiments of the second aspect, in some embodiments, the first information indicates one or more identifiers, and the PRS(s) or PRS set(s) expected for bandwidth aggregation have the same identifier.

**In** a third aspect, an embodiment of the disclosure provides a positioning measurement method performed by a communication system. The method includes sending first information by a network device to a terminal, in which the first information is used by the terminal to determine PRS(s) or PRS set(s) for bandwidth aggregation for positioning measurement; and determining the PRS(s) or the PRS set(s) for bandwidth aggregation for positioning measurement by the terminal.

**In** a fourth aspect, an embodiment of the disclosure provides a first positioning measurement apparatus. The apparatus includes a processing module configured to determine PRS(s) or PRS set(s) for bandwidth aggregation for positioning measurement.

**In** a fifth aspect, an embodiment of the disclosure provides a second positioning measurement apparatus. The apparatus includes a sending module configured to send first information, in which the first information is used by a terminal to determine PRS(s) or PRS set(s) for bandwidth aggregation for positioning measurement.

**In** a sixth aspect, an embodiment of the disclosure provides a communication device. The communication device includes one or more processors. The one or more processors are configured to invoke instructions to enable the communication device to perform the positioning measurement method of any one of the first aspect and the second aspect.

**In** a seventh aspect, an embodiment of the disclosure provides a communication system. The communication system includes a terminal and a network device. The terminal is configured to implement any one of the positioning measurement methods in the first aspect, and the network device is configured to implement any one of the positioning measurement methods in the second aspect.

**In** an eighth aspect, an embodiment of the disclosure provides a storage medium having instructions stored thereon. When the instructions are executed on a communication device, the communication device is caused to perform the positioning measurement method of any one of the first aspect and the second aspect.

**In** a ninth aspect, an embodiment of the disclosure provides a program product. When the program product is executed by a communication device, the communication device is caused to perform the method according to the optional implementation of the first aspect and the second aspect, and the second aspect and the third aspect.

**In** a tenth aspect, an embodiment of the disclosure provides a computer program which, when executed on a computer, enables the computer to perform the method of the first and third aspects, and the optional implementations of the second and third aspects.

**It** is understandable that the first communication apparatus, the second communication apparatus, the communication device, the communication system, the storage medium, the program product, and the computer program are all used to perform the methods according to the embodiments of the disclosure. Therefore, for the beneficial effects that may be achieved, reference may be made to the beneficial effects in the corresponding methods, which will not be repeated here.

The embodiments of the disclosure provide "positioning measurement methods, related apparatuses, communication device, communication system, and storage medium". In some embodiments, the terms such as "positioning measurement method", "communication method" and "information processing method" may be interchangeable, the terms such as "positioning measurement apparatus", "communication apparatus" and "information processing apparatus" may be interchangeable, and the terms such as "information processing system" and "communication system" may be interchangeable.

The embodiments of the disclosure are not exhaustive, but are only illustrative of some embodiments, and are not intended to be a specific limitation on the scope of protection of the disclosure. Without any contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementation methods in a certain embodiment may be arbitrarily combined. In addition, the embodiments may be arbitrarily combined. For example, some or all of the steps of different embodiments may be arbitrarily combined, and a certain embodiment may be arbitrarily combined with the optional implementation methods of other embodiments.

**In** each embodiment of the disclosure, unless otherwise specified or there is a logical conflict, the terms and/or descriptions between the embodiments are consistent and reference may be made to each other, and the technical features in different embodiments may be combined to form a new embodiment based on their internal logical relationships.

The terms used in the embodiments of the disclosure are only for the purpose of describing specific embodiments and are not intended to limit the disclosure.

**In** the embodiments of the disclosure, unless otherwise specified, elements expressed in the singular form, such as "a," "an," "the," "above," "said," "aforementioned," "this" or the like may mean "one and only one," "one or more," "at least one" or the like. For example, when using articles such as "a," "an," "the"" in English translation, the noun after the article may be understood as a singular expression or a plural expression.

**In** the embodiments of the disclosure, "a of plurality" refers to two or more.

**In** some embodiments, the terms "at least one of," "one or more," "a plurality of," "multiple" or the like may be used interchangeably.

**In** the embodiments of the disclosure, descriptions such as "at least one of A, B, C..." or "A and/or B and/or C..." include a situation where any one of A, B, C... exists alone, a situation where any multiple of A, B, C... exist in any combination, and a situation where each of A, B, C... exists alone; for example, "at least one of A, B, C" includes the situation where A exists alone, B exists alone, C exists alone, the combination of A and B, the combination of A and C, the combination of B and C, and the combination of A, B and C. For example, A and/or B includes the situation where A exists alone, B exists alone, and the combination of A and B.

**In** some embodiments, the descriptions such as "performing A in one case, and performing B in another case", "performing A in response to one case, and performing B in response to another case B" may include the following technical solutions according to the situation: performing A independently of B (that is, in some embodiments performing A), performing B independently of A (that is, in some embodiments performing B), selectively performing A and B (that is, selectively selecting A and B in some embodiments), and performing both A and B (that is, performing both A and B in some embodiments). When there are more branches such as A, B, C, etc., it is similar to the above.

The prefixes such as "first" and "second" in the embodiments of the disclosure are only used to distinguish different described objects, and are not used as restrictions on the position, order, priority, quantity or content of the described objects. The statement of the described object refers to the description in the context of the claims or embodiments, and should not constitute unnecessary restrictions due to the use of prefixes. For example, if the described object is a "field", the ordinal number before the "field" in "the first field" and "the second field" does not limit the position or order between the fields, and the "first" and "second" are not used to have a limitation on whether the fields modified by these terms are in the same message, nor are they used to have a limitation on the order of "the first field" and "the second field". As another example, if the described object is a "level", the ordinal number before the "level" in "the first level" and "the second level" does not limit the priority between the levels. As another example, the number of described objects is not limited by the ordinal number and may be one or more. Taking "the first device" as an example, the number of devices may be one or more. In addition, the objects modified by different prefixes may be the same or different. For example, if the described object is a "device," "the first device" and "the second device" may be the same device or different devices, and their types may be the same or different. As another example, if the described object is "information," "the first information" and "the second information" may be the same information or different information, and their contents may be the same or different.

**In** some embodiments, "including A," "containing A," "configured to indicate A," and "carrying A" may be interpreted as directly "carrying A" or "indirectly indicating A".

**In** some embodiments, terms such as "in response to," "in response to determining," "in a case where," "at," "when," "if" and so on may be used interchangeably.

**In** some embodiments, terms such as "greater than," "greater than or equal to," "not less than," "more than," "more than or equal to," "not smaller than," "higher than," "higher than or equal to," 79 "not lower than," and "above" may be used interchangeably. Terms such as "smaller than," "smaller than or equal to," "not greater than," "less than," "less than or equal to," "not more than," "lower than," "lower than or equal to," "not higher than," and "below" may be used interchangeably.

**In** some embodiments, an apparatus may be interpreted as physical or virtual, and its name is not limited to the names mentioned in the embodiments, such as "apparatus," "equipment," "device," "circuit," "network element," "node," "function," "unit," "section," "system," "network," "chip," "chip system," "entity," and "subject," which may be used interchangeably.

**In** some embodiments, the following terms may be used interchangeably: "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," "bandwidth part (BWP)" and so on.

**In** some embodiments, the following terms may be used interchangeably: "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client "and so on.

**In** some embodiments, the access network device, the core network device, or the network device may be replaced by a terminal. For example, the communication between the access network device, the core network device or the network device and the terminal is replaced by a structure of the communication between multiple terminals (for example, also referred to as device-to-device (D2D), vehicle-to-everything (V2X), or the like), or may use various embodiments of the disclosure. In this case, it may also be set as a structure in which the terminal has all or part of the functions of the access network device. In addition, terms such as "uplink" and "downlink" may also be replaced by terms corresponding to the communication between terminals (for example, "side"). For example, "uplink channel", "downlink channel" or the like may be replaced by "side channel", and "uplink," "downlink" or the like may be replaced by "sidelink".

**In** some embodiments, the terminal may be replaced by an access network device, a core network device or a network device. In this case, the access network device, the core network device or the network device may also be configured to have a structure that has all or part of the functions of the terminal.

**In** some embodiments, the name of information is not limited to names mentioned in the embodiments. The following terms may be used interchangeably: "information," "message," "signal," "signaling," "report," "configuration," "indication," "instruction," "command," "channel," "parameter, domain," "field," "symbol," "code element/symbol," "codebook," "codeword," "codepoint," "bit," "data," "program," "chip" and so on.

**In** some embodiments, terms such as "uplink," "up-link" and "physical uplink" may be used interchangeably. Terms such as "downlink," "down-link"and "physical downlink" may be used interchangeably. Terms such as "side," "sidelink," "side communication," "sidelink communication," "direct connection," "direct link," "direct communication" and "direct link communication" may be used interchangeable.

**In** some embodiments, terms such as "downlink control information (DCI)," "downlink (DL) assignment," "DL DCI," "uplink (UL) grant," and "UL DCI" may be used interchangeably.

**In** some embodiments, terms such as "physical downlink shared channel (PDSCH)," "DL data" and the like may be used interchangeably, and terms such as "physical uplink shared channel (PUSCH)," "UL data" and the like may be used interchangeably.

**In** some embodiments, the terms "radio," "wireless," "radio access network (RAN)," "access network (AN)," "RAN-based" and the like may be used interchangeably.

**In** some embodiments, terms such as "search space," "search space set," "search space configuration," "search space set configuration," "control resource set (CORESET)" and "CORESET configuration" may be used interchangeably.

**In** some embodiments, terms such as "synchronization signal (SS)," "synchronization signal block (SSB)," "reference signal (RS)," "pilot," and "pilot signal" may be used interchangeably.

**In** some embodiments, terms such as "moment," "time point," "time" and "time position" may be interchangeable, and terms such as "duration," "period," "time window," "window" and "time" may be interchangeable.

**In** some embodiments, the terms "component carrier (CC)," "cell," "frequency carrier," "carrier frequency" and the like may be used interchangeably.

**In** some embodiments, terms such as "resource block (RB)," "physical resource block (PRB)," "sub-carrier group (SCG)," "resource element group (REG)," "PRB pair," "RB pair" and "resource element (RE)" may be used interchangeably.

**In** some embodiments, terms such as "wireless access scheme" and "waveform" may be used interchangeably.

**In** some embodiments, terms such as "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element" and "panel" may be used interchangeably.

**In** some embodiments, terms such as "frame," "radio frame," "subframe," "slot," "sub-slot," "mini-slot", "symbol," "symbol" and "transmission time interval (TTI)" may be used interchangeably.

**In** some embodiments, terms "obtain," "acquire," "get," "receive," "transmit," "bidirectional transmission" and "send" and/or "receive" may be interchangeable, which may be interpreted as receiving from other entities, obtaining from a protocol, obtaining by self-processing, autonomous implementation, etc.

In some embodiments, terms such as "sending," "launching," "reporting," "issuing," "transmitting," "bidirectional transmission" and "sending" and/or "receiving" may be used interchangeably.

**In** some embodiments, "reservation" and "preset" may be interpreted as "pre-regulated" in a protocol or may be interpreted as a "preset action" performed by an apparatus.

**In** some embodiments, determining can be interpreted as, but is not limited to, estimating, deciding, judging, calculating, computing, processing, deriving, investigating, searching for, looking up, search, inquiry, ascertaining, receiving, transmitting, input, output, accessing, resolving, selecting, choosing, establishing, comparing, assuming, expecting, considering, broadcasting, notifying, communicating, forwarding, configuring, reconfiguring, allocating, mapping, assigning, or the like.

**In** some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

**In** some embodiments, the "network" may be interpreted as devices included in the network (e.g., access network device, core network device or the like).

**In** some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

**In** some embodiments, the acquisition of data, information or the like may comply with the laws and regulations of the country where the data is obtained.

**In** some embodiments, data, information or the like may be obtained with the user's consent.

**In** addition, each element, each row or each column in the table of the embodiments of the disclosure may be implemented as an independent embodiment, and the combination of any elements, any rows or any columns may also be implemented as an independent embodiment.

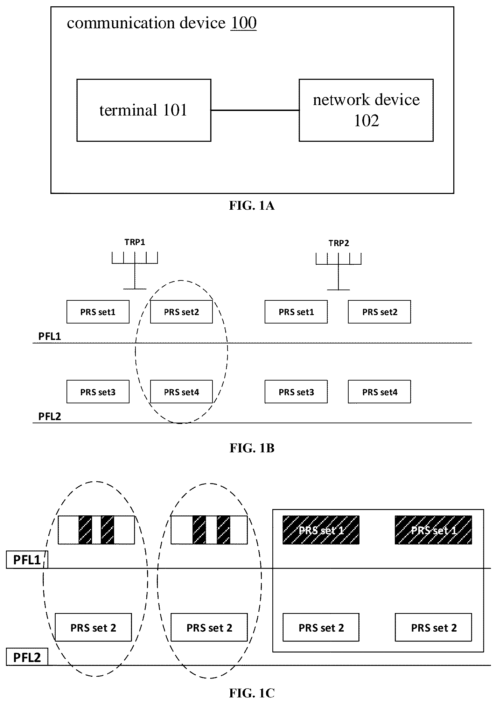

FIG. 1A is a schematic diagram illustrating an architecture of a communication system according to an embodiment of the disclosure.

As illustrated in FIG. 1A, a communication system 100 includes a terminal 101 and a network device 102.

**In** some embodiments, the network device 102 may include at least one of an access network device or a core network device.

**In** some embodiments, the terminal 101 includes, but is not limited to, for example, at least one of a mobile phone, a wearable device, an internet of things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home.

**In** some embodiments, the access network device is, for example, but is not limited to at least one of: a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system.

**In** some embodiments, the technical solution of the disclosure may be applicable to the Open RAN architecture. In this case, the interfaces between or within the access network devices involved in the embodiments of the disclosure may become internal interfaces of the Open RAN, and the processes and information interactions between these internal interfaces may be implemented through software or programs.

**In** some embodiments, the access network device may be composed of a centralized unit (central unit, CU) and a distributed unit (DU), in which the CU may also be referred to as a control unit. The CU-DU structure may be used to split the protocol layer of the access network device, with some functions of the protocol layer being centrally controlled by the CU, and the remaining part or all of the functions of the protocol layer being distributed in the DU. The DU is centrally controlled by the CU. The disclosure is not limited to this.

In some embodiments, the core network device may be a device including one or more network elements, may be multiple devices or a group of devices including one or more network elements, or may be physical. The core network may include, for example, at least one of an evolved packet core (EPC), a 5G core network (5GCN), or a next generation core (NGC).

It may be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1A or part of the subject, but the disclosure are not limited to the above. The subjects illustrated in FIG. 1A are examples, and the communication system may include all or some of the subjects in FIG. 1 or may include other subjects other than FIG. 1. The number and form of the subjects are arbitrary, and the connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSMTM), CDMA2000, Ultra Mobile Broadband (UMB), IEEE 802.11 (Wi-FiTM), IEEE 802.16 (WiMAXTM), IEEE 802.20, Ultra-WideBand (UWB), BluetoothTM, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application.

In the embodiments of the disclosure, the terminal performs the positioning measurement based on a reference signal, for example, performs the positioning measurement based on a PRS.

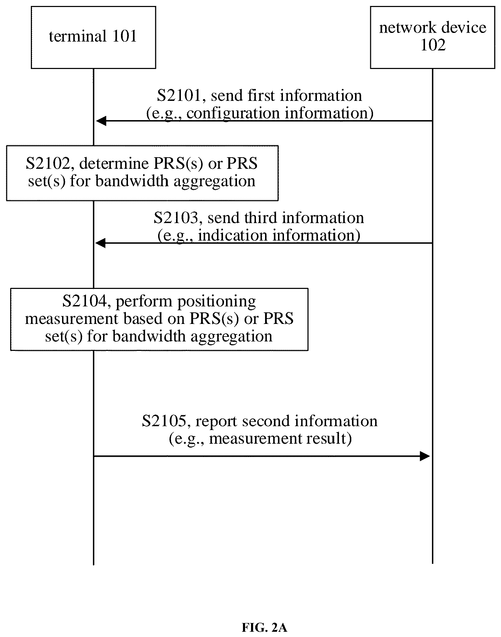

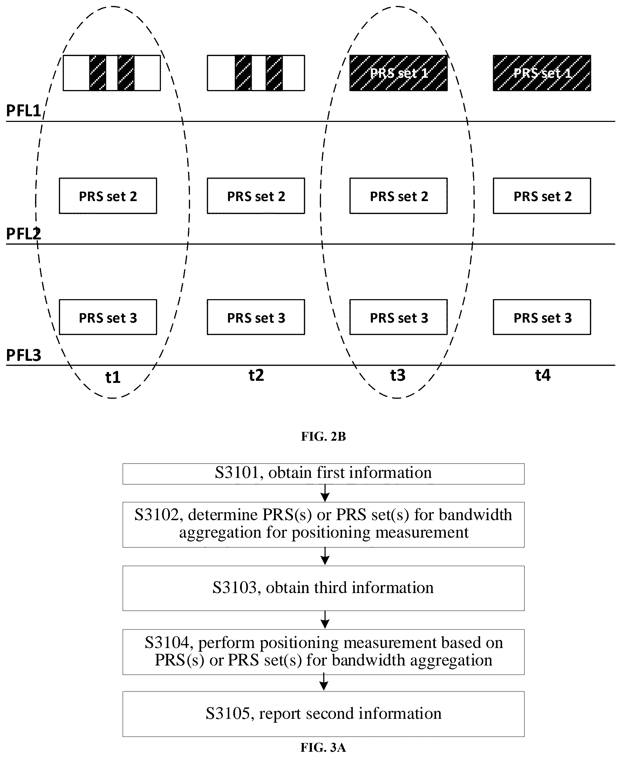

FIG. 1B is a schematic diagram illustrating a PRS configuration in an example embodiment of the disclosure. As illustrated in FIG. 1B, the network device will configure multiple positioning frequency layers (PFLs) for the terminal, such as PFL1 and PFL2 in FIG. 1B. One or more PRS/PRSs or PRS sets (PRS sets) will be configured for each transmission reception point (TRP) on each of the multiple PFLs. For example, in FIG. 2, PRS setl and PRS set2 are configured for TRP1 and TRP2 on PFL1 respectively, and PRS set3 and PRS set4 are configured for TRP1 and TRP2 on PFL2 respectively. The PRSs configured on each of the multiple PFLs or the PRSs included in the PRS sets configured on each PFL have many common features, such as the same subcarrier spacing, the same cyclic suffix length or the like.

In the PRS-based positioning measurement, the measurement may be performed separately based on each PRS set. For example, the measurement is performed based on PRS set 1 of TRP1 to obtain a measurement result, and a measurement is performed based on PRS set 3 to obtain a measurement result.

In the embodiments of the disclosure, in order to improve the positioning measurement accuracy, bandwidth aggregation may be performed based on the PRS under the continuous carriers of a single frequency band (intra-band). For example, as illustrated in FIG. 1B, the aggregation may be performed for the PRS sets of the same TRP on different PFLs. For example, in FIG. 1B, the aggregation is performed for the PRS setl and PRS set3 of TRP1 on the PFL1 and the PFL2 for measurement. Bandwidth aggregation for the PRS sets of the same TRP on different PFLs may be understood as treating the PRSs distributed in two different frequency domains as one PRS. In performing the positioning measurement at the receiving end, the PRSs/PRS sets on the two PFLs is regarded as an orthogonal frequency division multiplexing (OFDM) symbol for processing.

FIG. 1C is a schematic diagram illustrating muted and unmuted signals based on a muting pattern in an example embodiment of the disclosure.

As illustrated in FIG. 1C, reference signals are configured by the network device for the terminal (where the terminal 101 and the network device 102 are not illustrated, but the actual execution subject of the corresponding actions is the terminal 101 or the network device 102). For example, two muting patterns may be provided for the PRS set. In one muting pattern, one or more PRSs involved in the PRS set are muted. For example, the shaded portions in the PRS set1 in the oval frame in FIG. 1C are the muted PRSs. In another muting pattern, the entire PRS set is muted. For example, the shaded portions in the PRS setl in the square frame in FIG. 1C are the muted PRSS.

**In** some embodiments, a muted or dropped reference signal may be understood as a reference signal that will not be sent by the network device 102. The terminal 101 therefore will not receive the muted or dropped reference signal in the corresponding time-frequency resources.

**In** the embodiments of the disclosure, the terminal determines PRS(s)/PRS set(s) for bandwidth aggregation to perform positioning measurement based on the PRS(s)/PRS set(s) for bandwidth aggregation.

For the convenience of description in the embodiments of the disclosure, the PRS(s)/PRS set(s) for bandwidth aggregation determined by the terminal is referred to as first reference signal(s).

**It** may be understood that the first reference signal is a reference signal for positioning measurement. The first reference signal(s) includes at least one of at least two PRSs or at least two PRS sets. For example, the first reference signal(s) includes at least two PRSs, or includes at least two PRS sets. Or the first reference signal(s) may include one or more PRSs and one or more PRS sets.

**It** is understandable that in the embodiments of the disclosure, PRS is sometimes referred to as PRS resource, and PRS set is sometimes referred to as PRS or PRS set. In the embodiments of the disclosure, these terms are sometimes used interchangeably, and it should be understood that their meanings are consistent.

**In** the embodiments of the disclosure, the terminal determines the PRS(s)/PRS set(s) for bandwidth aggregation, which may be understood as a way for the terminal to select the PRS(s)/PRS set(s) for bandwidth aggregation to improve the accuracy of positioning measurement while considering increasing the transmission opportunities of PRS and reducing the measurement delay.

FIG. 2A is an interactive schematic diagram of a positioning measurement method according to an embodiment of the disclosure. As illustrated in FIG. 2A, embodiments of the disclosure relate to a positioning measurement method performed by a communication system 100. The method includes the following.

At step S2101, the network device 102 sends first information to the terminal 101.

**In** some embodiments, the terminal 101 receives first information sent by the network device 102.

**In** some embodiments, the first information indicates parameter information for the terminal to perform the positioning measurement.

**In** some embodiments, the first information indicates at least two PRSs or at least two PRS sets expected for bandwidth aggregation for positioning measurement.

**In** some embodiments, the first information indicates reference signals for performing the positioning measurement.

**In** some embodiments, the first information may be configuration information, for example, configuration information sent by a network device to a terminal. The configuration information may be information for configuring the positioning measurement.

**In** some embodiments, the first information indicates reference signals expected for bandwidth aggregation for positioning measurement.

**In** some embodiments, the reference signal expected for bandwidth aggregation in the positioning measurement is called a second reference signal. The second reference signals includes at least two PRSs or at least two PRS sets configured by the network device expected for bandwidth aggregation for positioning measurement.

**In** some embodiments, the second reference signals include different reference signals.

**In** some embodiments, the second reference signals include PRS(s) or PRS set(s) for which the bandwidth aggregation can be performed and PRS(s) or PRS set(s) for which the bandwidth aggregation cannot be performed.

**In** some embodiments, the PRS(s) or PRS set(s) for which the bandwidth aggregation cannot be performed generally includes at least one of: dropped PRS(s) or PRS set(s) or muted PRS(s) or PRS set(s).

**In** some embodiments, the generation of the dropped PRS or PRS set is based on the following reasons: PRS is sent in PPW, and the terminal performs the measurement in PPW. In PPW, the priorities of various channels or signals are defined. If a high-priority channel or signal needs to be sent, the PRS in PPW will be dropped.

**In** some embodiments, the muted PRS or PRS set is generated based on a muting pattern.

**In** some embodiments, the PRS or PRS set for which the bandwidth aggregation can be performed generally includes the non-dropped signal or the unmuted signal.

**In** some embodiments, the first information indicates one or more lists. The one or more lists include the PRS(s) or PRS set(s) expected for bandwidth aggregation.

**In** some embodiments, the first information indicates one or more PRS lists. The one or more PRS lists include the second reference signals.

**In** some embodiments, the first information indicates one or more PRS lists. The one or more PRS lists include the PRS(s) or PRS set(s) expected for bandwidth aggregation.

**In** some embodiments, the first information indicates one or more identifiers, and the PRS(s) or PRS set(s) included in the second reference signals have the same identifier.

**In** some embodiments, the first information indicates one or more identifiers, and the PRS(s) or PRS set(s) expected for bandwidth aggregation have the same identifier.

**In** some embodiments, the muted or dropped reference signal may be understood as a reference signal that will not be sent by the network device 102. The terminal 101 therefore will not receive the muted or dropped reference signal in the corresponding time-frequency resources.

**In** some embodiments, the muted or dropped PRS or PRS set in the second reference signal is called a first sub-reference signal. The unmuted or non-dropped PRS or PRS set in the second reference signal is called a second sub-reference signal.

**In** the embodiments of the disclosure, in a case where the second reference signal configured by the first information sent by the network device 102 includes the first sub-reference signal, although the network device 102 expects to perform the bandwidth aggregation based on the first sub-reference signal, since the network device 102 does not send the first sub-reference signal, the terminal 101 cannot perform the bandwidth aggregation based on the first sub-reference signal. Continuing to refer to FIG. 1C, the network device 102 indicates to perform the bandwidth aggregation for the PRS setl and the PRS set2. The terminal cannot perform the bandwidth aggregation for the PRS setl and the PRS set2.

**In** some embodiments, the second reference signal includes a muted or dropped PRS or a muted or dropped PRS set, and the first reference signal includes an unmuted or non-dropped PRS or an unmuted or non-dropped PRS set.

**In** some embodiments, the second reference signal includes the first sub-reference signal.

**In** some embodiments, the second reference signal includes a second sub-reference signal.

**In** some embodiments, the second reference signal includes a first sub-reference signal and a second sub-reference signal.

**In** some embodiments, the PRS(s) or PRS set(s) expected for bandwidth aggregation includes at least one of: muted PRS(s) or muted PRS set(s), dropped PRS(s) or dropped PRS set(s), unmuted PRS(s) or unmuted PRS set(s), or non-dropped PRS(s) or non-dropped PRS set(s).

**In** some embodiments, the network device 102 sends configuration information, and the configuration information includes the first information. For example, the terminal 101 receives the above configuration information. The configuration information is used for configuring the PRS(s) or PRS set(s) expected by the network device for bandwidth aggregation for positioning measurement. The configuration information may be a Radio Resource Control (RRC) signaling or a Media Access Control-Control Element (MAC-CE) signaling.

At step S2102, the terminal 101 determines PRS(s) or PRS set(s) for bandwidth aggregation.

**In** some embodiments, the PRS(s) or the PRS set(s) for bandwidth aggregation is PRS(s) or PRS set(s) for bandwidth aggregation selected by a terminal in the positioning measurement.

**In** some embodiments, the PRS(s) or the PRS set(s) for bandwidth aggregation includes at least two PRSs or at least two PRS sets for positioning measurement. The bandwidth aggregation is performed for at least two PRSs or the at least two PRS sets.

**In** some embodiments, the PRS(s) or PRS set(s) for bandwidth aggregation is determined based on the first information.

**In** some embodiments, the PRS(s) or the PRS set(s) for bandwidth aggregation is the same as the PRS(s) or the PRS set(s) expected for bandwidth aggregation indicated by the first information.

**In** some embodiments, the PRS(s) or PRS set(s) for bandwidth aggregation includes the PRS(s) or PRS set(s) expected for bandwidth aggregation.

**In** some embodiments, the PRS(s) or the PRS set(s) for bandwidth aggregation is some of the PRS(s) or the PRS set(s) configured by the first information.

**In** some embodiments, the PRS(s) or PRS set(s) for bandwidth aggregated includes at least one of unmuted PRS(s) or unmuted PRS set(s) or non-dropped PRS(s) or non-dropped PRS set(s) among the PRS(s) or the PRS set(s) expected for bandwidth aggregation.

**In** some embodiments, the terminal 101 determines the PRS(s) or PRS set(s) for bandwidth aggregation for positioning measurement based on the PRS(s) or PRS set(s) expected for bandwidth aggregation.

**In** some embodiments, the terminal 101 determines PRS(s) or PRS(s) set expected for bandwidth aggregation as the PRS(s) or PRS set(s) for bandwidth aggregation for positioning measurement.

**In** some embodiments, the terminal 101 determines at least one of the unmuted PRS(s) or PRS set(s) or the non-dropped PRS(s) or PRS set(s) among the PRS(s) or the PRS set(s) expected for bandwidth aggregation as the PRS(s) or the PRS set(s) for bandwidth aggregation for positioning measurement.

**In** some embodiments, the terminal 101 determines at least one of: muted PRS(s) or PRS set(s), dropped PRS(s) or PRS set(s), unmuted PRS(s) or PRS set(s), or non-dropped PRS(s) or PRS set(s).

At step S2103, the network device 102 sends third information to the terminal 101.

**In** some embodiments, the third information indicates whether the terminal is allowed to independently select PRS(s) or PRS set(s) for bandwidth aggregation for positioning measurement.

**In** some embodiments, the third information indicates that the terminal is allowed to select the PRS(s) or the PRS set(s) for bandwidth aggregation for positioning measurement. That is, the third information indicates that the terminal may select the PRSs for bandwidth aggregation by itself.

**In** some embodiments, the third information indicates that the terminal is allowed to independently select the PRS(s) or PRS set(s) for bandwidth aggregation for positioning measurement. In a case where there is muted or dropped PRS(s) or PRS set(s) in the reference signal expected for bandwidth aggregation, the terminal may perform the positioning measurement based on the unmuted or non-dropped PRS(s) or PRS set(s).

**In** some embodiments, the third information indicates that the terminal is not allowed to select by itself PRS(s) or PRS set(s) for bandwidth aggregation for positioning measurement. That is, the third information indicates that the terminal cannot select the PRSs for bandwidth aggregation by itself.

**In** some embodiments, the third information indicates that the terminal is not allowed to select by itself the PRS(s) or PRS set(s) for bandwidth aggregation for positioning measurement and the terminal is not allowed to perform the positioning measurement based on the unmuted or non-dropped PRS(s) or PRS set(s). For example, in a case where there is muted or dropped PRS(s) or PRS(s) set in the reference signals expected for bandwidth aggregation, the terminal is not allowed to perform the positioning measurement based on the non-dropped or unmuted PRS(s) or PRS set(s).

**In** some embodiments, in a case where the third indication information indicates that the terminal is allowed to independently select PRS(s) or PRS set(s) for bandwidth aggregation for positioning measurement, the terminal 101 determines unmuted or non-dropped PRS(s) or unmuted or non-dropped PRS set(s).

In some embodiments, the third information is configuration information, for example, pre-configuration based on a resource pool.

In some embodiments, the third information is indication information, such as information based on a network indication.

At step S2104, the terminal 101 performs the positioning measurement based on the PRS(s) or the PRS set(s) for bandwidth aggregation.

In some embodiments, the terminal 101 performs the positioning measurement on the determined PRS(s) or the PRS set(s) for bandwidth aggregation for positioning measurement.

For example, a schematic diagram of a positioning measurement signal according to an example embodiment is provided. As illustrated in FIG. 2B, at time t2, the aggregation is performed for the unmuted and non-dropped RPS sets on the PFL1, PFL2 and PFL3. For example, the aggregation is performed on the RPSs corresponding to the non-shaded portions of the PRS set2 on the PFL2, the PRS set3 on the PFL3 and the PRS setl on the PFL1, and the positioning measurement is performed.

At time t3 and t4, the terminal 101 performs the aggregation for the PRS set 2 and the PRS set 3 for the bandwidth aggregation on the PFL2 and the PFL3 and performs the positioning measurement.

**In** some embodiments, the terminal 101 performs the positioning measurement on the unmuted or non-dropped PRS(s) or PRS set(s).

**In** some embodiments, the third indication information indicates that the terminal is allowed to select the PRS(s) or PRS set(s) for bandwidth aggregation for positioning measurement, and the terminal 101 measures the unmuted or non-dropped PRS(s) or PRS set(s).

**In** some embodiments, the positioning measurement is performed at a time corresponding to the determined PRS(s) or PRS set(s) for bandwidth aggregation for positioning measurement. For example, a schematic diagram of a positioning measurement signal according to an example embodiment is provided. As illustrated in FIG. 2B, since it is determined that the terminal will only perform the measurement at the time corresponding to the unmuted or non-dropped PRS(s) or PRS set(s), the terminal will only perform the measurements at time t2 and will not perform the measurement at time t3 or t4.

In some embodiments, the terminal 101 does not perform the positioning measurement based on the unmuted or non-dropped PRS(s) or PRS set(s).

In some embodiments, the terminal 101 does not perform the positioning measurements on the unmuted or non-dropped PRS(s) or PRS set(s).

In some embodiments, the terminal 101 does not perform the positioning measurements at a time corresponding to at least one of the unmuted PRS(s) or PRS set(s) or the non-dropped PRS(s) or PRS set(s) among the PRS(s) or PRS set(s) expected for bandwidth aggregation.

In some embodiments, in a case where the third indication information indicates that the terminal is not allowed to independently select PRS(s) or PRS set(s) for bandwidth aggregation for positioning measurement, the terminal 101 does not perform the positioning measurement.

In some embodiments, in a case where the third indication information indicates that the terminal is not allowed to select by itself the PRS(s) or PRS set(s) for bandwidth aggregation for positioning measurement, the terminal 101 does not perform the positioning measurement at the time corresponding to at least one of the unmuted PRS(s) or PRS set(s) or the non-dropped PRS(s) or PRS set(s) among the PRS(s) or PRS set(s) expected for bandwidth aggregation. For example, a schematic diagram of a positioning measurement signal according to an example embodiment is provided. As illustrated in FIG. 2B, since the third indication information indicates that the terminal is not allowed to select by itself the PRS(s) or PRS set(s) for bandwidth aggregation for positioning measurement, the terminal does not perform the positioning measurement at the time t3 and t4.

At step S2105, the terminal 101 reports the second information to the network device 102.

In some embodiments, the second information indicates the measurement result of the positioning measurement. For example, the second information indicates to report the positioning measurement result to the network, and at the same time, it indicates to report which PRS(s) or PRS set(s) for which the aggregation is performed to obtain the measurement result.

In some embodiments, the second information indicates positioning frequency layer information.

In some embodiments, the second information indicates component carriers.

For example, the second information indicates that the reported content includes the component carriers or a positioning frequency layer list.

In some embodiments, the positioning frequency layer information indicates component carriers, in which the bandwidth aggregation is performed for the PRS(s) or the PRS set(s) under the component carries in the positioning measurement. For example, the positioning frequency layer information indicates that the measurement result is a result of performing the aggregation for the PRS(s) or PRS set(s) under these component carriers in the list or the positioning frequency layer list.

In some embodiments, the second information indicates whether to perform the positioning measurement based on the PRS(s) or the PRS set(s) for bandwidth aggregation.

In some embodiments, the second information indicates whether the measurement result obtained by performing the positioning measurement is based on the PRS(s) or PRS set(s) expected for bandwidth aggregation. For example, the second information is used for informing the network device whether the measurement result is obtained by measuring the PRS(s) or PRS set(s) for aggregation based on a requirement of a network configuration.

In some embodiments, the positioning frequency layer information indicates the PRS(s) or PRS set(s) for bandwidth aggregation for positioning measurement. For example, the positioning frequency layer information indicates that the measurement result is a result of performing the aggregation for the PRS(s) or PRS set(s) under these component carriers or the positioning frequency layer list.

In some embodiments, the second information indicates whether to perform the positioning measurement on the PRS(s) or the PRS set(s) for bandwidth aggregation based on the second reference signal.

In some embodiments, the second information indicates whether to perform the positioning measurement based on the PRS(s) or PRS set(s) expected for bandwidth aggregation. For example, the second information is used for informing the network device whether the measurement result is obtained by measuring the PRS(s) or PRS set(s) for aggregation based on a requirement of the network configuration.

The positioning measurement method according to the embodiments of the disclosure may include at least one of steps S2101 to S2104. For example, the step S2102 may be implemented as an independent embodiment, the step S2103 may be implemented as an independent embodiment, the step S2101 and the step S2102 may be implemented as an independent embodiment, and the step S2101, the step S2102 and the step S2103 may be implemented as an independent embodiment. The disclosure is not limited to the above. In some embodiments, the step S2102 and the step S2103 may be exchanged in order or performed simultaneously. The step S2101 and the step S2104 may be exchanged in order or performed simultaneously. In some embodiments, the step S2101 and the step S2104 are optional, and one or more of these steps may be omitted or replaced in different embodiments.

FIG. 3A is a flowchart illustrating a positioning measurement method according to an embodiment of the disclosure. As illustrated in FIG. 3A, embodiments of the disclosure relate to a positioning measurement method. The method is performed by a terminal. The method includes the following.

At step S3101, first information is obtained.

For the optional implementation of step S3101, reference may be made to the optional implementation of the step S2101 in FIG. 2A and other related parts in the embodiments involved in FIG. 2A, which will not be described in detail here.

In some embodiments, the terminal 101 receives the first information from the network device 102 and may also receive the first information from other entities. The first information may indicate the first information, that is, the first information may indicate a first number of beam combinations.

In some embodiments, the terminal 101 obtains the first information specified by a protocol.

In some embodiments, the terminal 101 obtains the first information from upper layer(s).

In some embodiments, the terminal 101 performs processing to obtain the first information.

In some embodiments, the step S3101 is omitted, and the terminal 101 autonomously determines the first information, that is, determines the first number of beam combinations, or the above function is default or acquiescent.

At step S3102, PRS(s) or a PRS set(s) for bandwidth aggregation for positioning measurement is determined.

For the optional implementation of step S3102, reference may be made to the optional implementation of the step S2102 in FIG. 2A and other related parts in the embodiments involved in FIG. 2A, which will not be described in detail here.

At step S3103, third information is obtained.

For the optional implementation of the step S3103, reference may be made to the optional implementation of the step S2103 in FIG. 2A and other related parts in the embodiments involved in FIG. 2A, which will not be described in detail here.

In some embodiments, the terminal 101 receives the third information from the network device 102 and may also receive the third information from other entities. The third information may indicate the third information, that is, the third information may indicate the first number of beam combinations.

In some embodiments, the terminal 101 obtains third information specified by the protocol.

In some embodiments, the terminal 101 obtains the third information from upper layer(s).

In some embodiments, the terminal 101 performs processing to obtain the third information.

In some embodiments, the step S3103 is omitted, the terminal 101 autonomously determines the third information, or the above function is default or acquiescent.

At step S3104, the positioning measurement is performed based on the PRS(s) or PRS set(s) for bandwidth aggregation.

For the optional implementation of the step S3104, reference may be made to the optional implementation of the step S2104 in FIG. 2A and other related parts in the embodiments involved in FIG. 2A, which will not be described in detail here.

At step S3105, the second information is reported.

For the optional implementation of the step S3105, reference may be made to the optional implementation of the step S2105 in FIG. 2A and other related parts in the embodiments involved in FIG. 2A, which will not be described in detail here.

The positioning measurement method according to the embodiments of the disclosure may include at least one of the steps S3101 to S3105. For example, the step S3102 may be implemented as an independent embodiment, the step 3104 may be implemented as an independent embodiment, the step S3101 and the step S3102 may be implemented as an independent embodiment, the step S3101 and the step S3103 may be implemented as an independent embodiment, and the step S3101m the step S3102 and the step S3103 may be implemented as an independent embodiment. The disclosure is not limited to the above.

In some embodiments, the step S3101 is optional, and one or more of these steps may be omitted or replaced in different embodiments.

In some embodiments, the step S3103 is optional, and one or more of these steps may be omitted or replaced in different embodiments.

In some embodiments, the step S3105 is optional, and one or more of these steps may be omitted or replaced in different embodiments.

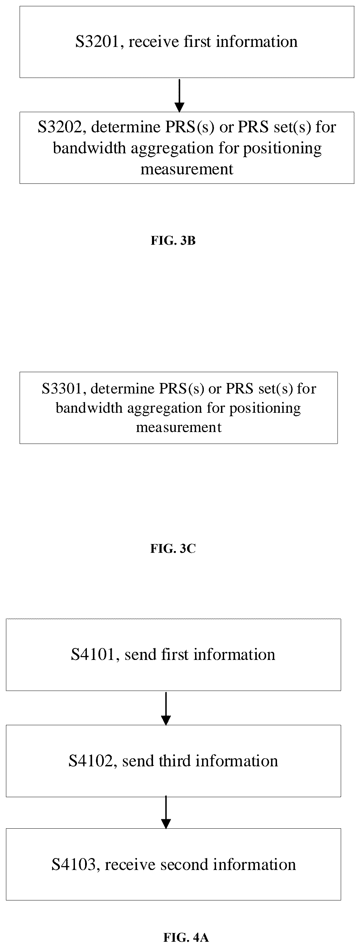

FIG. 3B is a schematic flowchart illustrating a positioning measurement method according to an embodiment of the disclosure. As illustrated in FIG. 3B, embodiments of the disclosure relate to a positioning measurement method performed by a terminal. The method includes the following.

At step S3201, first information is received.

For the optional implementation method of the step S3201, reference may be made to the optional implementation method of the step S2101 in FIG. 2A and other related parts in the embodiments involved in FIG. 2A, or the optional implementation method of the step S2201 in FIG. 2B and other related parts in the embodiments involved in FIG. 2B, which will not be repeated here.

At step S3202, the PRS(s) or the PRS set(s) for bandwidth aggregation for positioning measurement is determined.

For the optional implementation of the step S3202, reference may be made to the optional implementation of the step S2102 in FIG. 2A and other related parts in the embodiments involved in FIG. 2A, which will not be repeated here.

In the embodiments of the disclosure, the step S3202 may be implemented as an independent embodiment, and the step S3201 and the step S3202 may be implemented as independent embodiments. The disclosure is not limited to the above.

FIG. 3C is a flowchart illustrating another positioning measurement method according to an example embodiment. As illustrated in FIG. 3C, the embodiments of the disclosure relate to a positioning measurement method performed by a terminal. The method includes the following.

At step S3301, the PRS(s) or the PRS set(s) for bandwidth aggregation for positioning measurement is determined.

In the embodiments of the disclosure, the step S3301 may be implemented as an independent embodiment or combined with the steps S3101, S3102, S3103 and S3104 of FIG. 3a. The step S3301 may also be combined with the steps S3201, S3202, S3203 and S3204 of FIG. 3B, but the step S320 is not limited thereto.

FIG. 4A is a flowchart illustrating a positioning measurement method according to an embodiment of the disclosure. As illustrated in FIG. 4A, the embodiments of the disclosure relate to a positioning measurement method performed by a network device. The method includes the following.

At step S4101, the first information is sent.

For the optional implementation of the step S4101, reference may be made to the optional implementation of the step S2101 in FIG. 2A and other related parts in the embodiments involved in FIG. 2A, which will not be described in detail here.

At step S4102, the third information is sent.

For the optional implementation of the step S4102, reference may be made to the optional implementation of the step S2103 in FIG. 2A and other related parts in the embodiments involved in FIG. 2A, which will not be described in detail here.

At step S4103, the second information is received.

For the optional implementation of the step S4103, reference may be made to the optional implementation of the step S2105 in FIG. 2A and other related parts in the embodiments involved in FIG. 2A, which will not be described in detail here.

The positioning measurement method according to the embodiments of the disclosure may include at least one of the steps S4101 to S4103. For example, the step S4101 may be implemented as an independent embodiment, the step S4102 may be implemented as an independent embodiment, and the step S4101 and the step S4102 may be implemented as independent embodiments. The disclosure is not limited to the above.

In some embodiments, the step S4103 is optional, and one or more of these steps may be omitted or replaced in different embodiments.

In some embodiments, the step S4102 is optional, and one or more of these steps may be omitted or replaced in different embodiments.

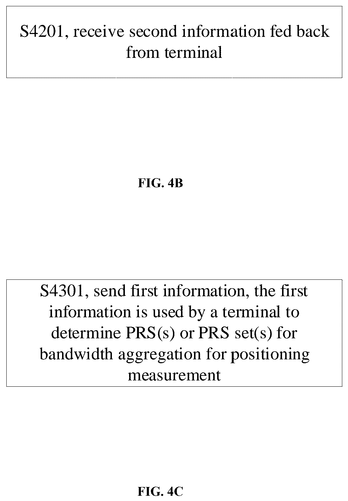

FIG. 4B is a flowchart illustrating a positioning measurement method according to an embodiment of the disclosure. As illustrated in FIG. 4B, the embodiments of the disclosure relate to a positioning measurement method performed by a network device. The method includes the following.

At step S4201, second information fed back by the terminal is received.

For the optional implementation method of the step S4201, reference may be made to the optional implementation method of the step S2104 in FIG. 2A and other related parts in the embodiments involved in FIG. 2A, or to the optional implementation method of the step S2204 in FIG. 2B and other related parts in the embodiments involved in FIG. 2B, which will not be repeated here.

In the embodiments of the disclosure, the step S4201 may be implemented as an independent embodiment. The disclosure is not limited to the above.

In the embodiments of the disclosure, each of the above steps may be implemented as an independent embodiment.

In the embodiments of the disclosure, some or all of the steps and their optional implementations may be arbitrarily combined with part or all of the steps in other embodiments, or may be arbitrarily combined with optional implementations of other embodiments.

FIG. 4C is a flowchart illustrating another positioning measurement method according to an example embodiment. As illustrated in FIG. 4C, the embodiments of the disclosure relate to a positioning measurement method performed by a network device. The method includes the following.

At step S4301, first information is sent. The first information is used by the terminal to determine PRS(s) or PRS set(s) for bandwidth aggregation for positioning measurement.

In the embodiments of the disclosure, the step S4301 may be implemented as an independent embodiment or combined with the steps S4101, S4102, S4103 and S4104 of FIG. 4A. The step S4301 may also be combined with the steps S4201, S4202, S4203 and S4204 of FIG. 4B, but the step S420 is not limited thereto.

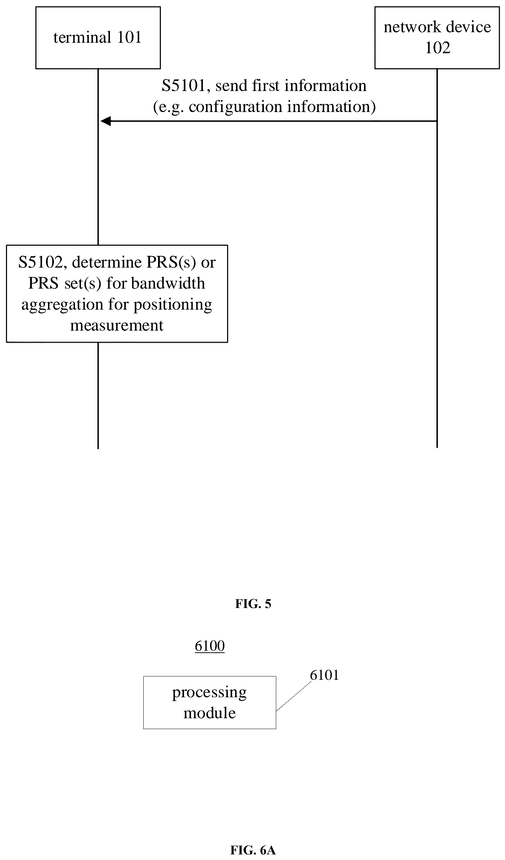

FIG5 is a systematic flowchart illustrating a positioning measurement method according to an embodiment of the disclosure. As illustrated in FIG. 5, embodiments of the disclosure relate to a beam combination determination method, performed by a communication system 100. The method includes the following.

At step S5101, the network device 102 sends a first message to the terminal 101.

**In** some embodiments, the first information is used by the terminal to determine PRS(s) or PRS set(s) for bandwidth aggregation for positioning measurement.

For the optional implementation of the step S5101, reference may be made to the optional implementation of the step S2101 in FIG. 2A and other related parts in the embodiments involved in FIG. 2. For the optional implementation of the step S5101, reference may be made to the optional implementation of the step S4101 in FIG. 4A and other related parts in the embodiments involved in FIG. 4A. For the optional implementation of the step S5101, reference may be made to the optional implementation of the step S4201 in FIG. 4B and other related parts in the embodiments involved in FIG. 4B.

At step S5102, the terminal determines PRS(s) or PRS set(s) for bandwidth aggregation for positioning measurement.

For the optional implementation of the step S5102, reference may be made to the optional implementation of the step S2102 in FIG. 2A and other related parts in the embodiment involved in FIG. 2A. For the optional implementation of the step S5102, reference may be made to the optional implementation of the step S3102 in FIG. 3A and other related parts in the embodiments involved in FIG. 3A. For the optional implementation of the step S5102, reference may be made to the optional implementation of the step S3202 in FIG. 3b and other related parts in the embodiments involved in FIG. 3B.

In some embodiments, the above method may include the methods described in the above embodiments related to the communication system 100, the terminal 101, the network device 102, etc., which will not be repeated here.

The method according to the embodiments of the disclosure includes the following.

Method 1: Users select the PRS resource(s) or resource set(s) for aggregation.

Configuration: The network configures to the user which two or more PRS resources or resource sets for which the bandwidth aggregation is needed to perform for positioning measurement.

A PRS set/resource for bandwidth aggregation list is configured for each TRP. The PRS resource sets or resources in the list are the reference signals expected by the network for aggregation.

In some examples, multiple link IDs are configured. In the PRS set/resource configuration, the reference signals with the same link ID are included as the reference signals for which it is required to perform the aggregation.

Measurement: When the user performs the positioning measurement, it determines whether the PRS(s) to be measured will be sent based on the muting option, each channel or the priority of each channel in the PPW, and then selects the PRS set(s) for which the aggregation is needed to perform. If there is a PRS that will not be sent, the user performs the positioning measurement based on other PRS set(s).

As illustrated in the figures below, at the time t1 and t2, the aggregation is performed for PRS sets on the three PFLs. At the time t3 and t4, the user only performs the aggregation for the PRSs on the PFL2 and the PFL3.

Method 2: The network indicates whether the user can select the PRS resource(s) or resource set(s) for aggregation.

If the network indicates that the user can make the selection, the user makes the selection in the same way as in method 1 and reports it.

If the network indicates that the user cannot make the selection, the user will perform the measurement only when no PRS resources/resource sets are muted or dropped. As illustrated in the figures below, the user will not perform the measurement at the time t3 and t4, and will perform the measurement at the time t2.

In some embodiments, a method for determining a PRS resource/resource set for bandwidth aggregation by a user includes determining whether to send the PRS for the measurement based on the muting option, each channel or the priority of each channel in the PPW when performing the positioning measurement based on the PRS, and then selecting the PRS resource/resource set for aggregation.

If there are PRSs that will not be sent, the user will only measure other PRSs in the PRS resources/resource sets expected by the network for aggregation when performing the positioning measurements. If the PRS resources/resource sets for which the network expects to aggregate will not be sent, no measurement will be performed.

In some embodiments, configuration information from a network is received, and the configuration information is used for configuring which two or more PRS resources or resource sets are expected to be aggregated for the user for positioning measurement. A PRS set/resource for bandwidth aggregation list is configured for each TRP, and the PRS resource sets or resources in the list are reference signals expected by the network for aggregation. In some examples, multiple link IDs are configured, and the PRS sets/resources having the same link ID in the PRS set/resource configuration are the reference signals for which the aggregation needs to perform.

In some embodiments, after the user performs the measurement based on the selected PRS resources/resource sets, the positioning measurement result is reported to the network, and at the same time, which PRS resources/resource sets for which the aggregation is performed to obtain the measurement result are required to be reported.

In some embodiments, the report includes a CC or PFL list, indicating that the measurement result is a result obtained by performing the aggregation for the PRS resources/resource sets under these CCs/PFLs.

In some embodiments, a 1-bit representation is added to the report content to inform the network whether the measurement result is obtained by measuring the PRS resource(s)/resource set(s) for aggregation based on the needs of the network configuration.

In some embodiments, indication information from a network is received, and the indication information indicates that the user may select the PRS resource(s) or resource set(s) for aggregation by itself.

In some embodiments, indication information from a network is received, and the indication information indicates that the user cannot select the PRS resource(s) or resource set(s) for aggregation by itself.

The user will only perform the measurement when no PRS resource/resource set is muted or dropped. As illustrated in the figures below, the user will not perform the measurement at time t3 and t4, and will perform the measurement at time t2.

The embodiments of the disclosure also provide a device for implementing any of the above methods, for example, a device is provided. The above device includes a unit or module for implementing each step performed by the terminal in any of the above methods. As another example, another device is provided, including a unit or module for implementing each step performed by a network device (such as an access network device, a core network function node, a core network device, etc.) in any of the above methods.

It should be understood that the division of the units or modules in the above device is only a division of logical functions, and in actual implementation, they may be fully or partially integrated into one physical entity, or they may be physically separated. In addition, the units or modules in the device may be implemented in the form of a processor calling software. For example, the device includes a processor, the processor is connected to a memory, and instructions are stored in the memory. The processor calls the instructions stored in the memory to implement any of the above methods or implement the functions of the units or modules of the above device. The processor is, for example, a general-purpose processor, such as a central processing unit (CPU) or a microprocessor, and the memory is a memory inside the device or a memory outside the device. For example, the units or modules in the device may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, to realize the functions of some or all of the above units or modules. All units or modules of the above devices may be realized in the form of a processor calling software, in the form of a hardware circuit, or in part by a processor calling software, and the rest by a hardware circuit.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may implement certain functions through the logical relationship of a hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU).

FIG. 6A is a block diagram illustrating a first positioning measurement device according to an embodiment of the disclosure. As illustrated in FIG. 6A, the first positioning measurement device includes the following.

The processing module 6101 is configured to determine PRS(s) or PRS set(s) for bandwidth aggregation for positioning measurement. For example, the processing module is configured to perform the processing-related steps performed by the terminal 101 in any of the above methods, which are not repeated here. For example, the first positioning measurement device also includes at least one of a sending module and a receiving module, and at least one of the sending module and the receiving module is configured to execute the steps related to at least one of sending and receiving performed by the terminal 101 in any of the above methods, which are not repeated here.

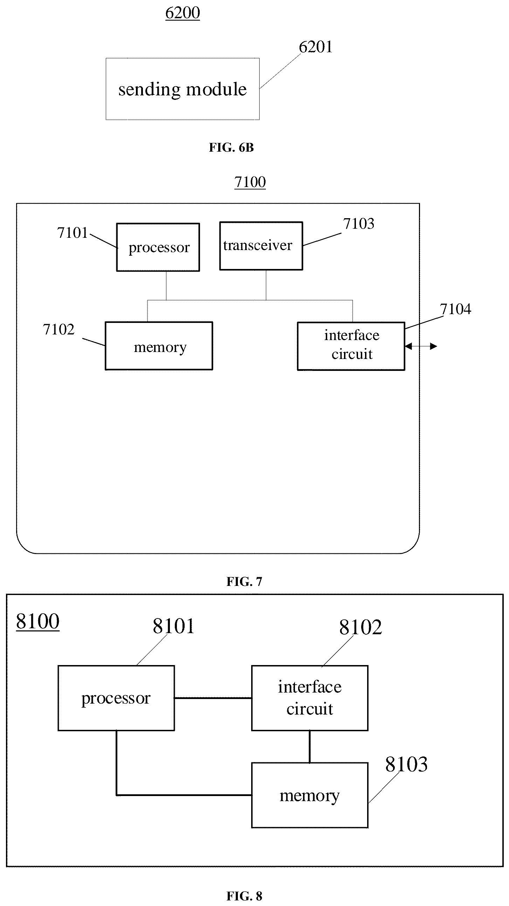

FIG. 6B is a block diagram illustrating a second positioning measurement device according to an embodiment of the disclosure. As illustrated in FIG. 6B, the second positioning measurement device includes the following.

The sending module 6201 is configured to send first information. The first information is used by the terminal to determine PRS(s) or PRS set(s) for bandwidth aggregation for positioning measurement.

For example, the sending module is configured to perform the steps related to sending performed by the network device 102 in any of the above methods, which are not described in detail here. For example, the second positioning measurement device further includes a processing module, which is configured to perform the steps related to processing performed by the network device 102 in any of the above methods, which are not described in detail here. For example, the second positioning measurement device further includes a receiving module configured to perform the steps related to receiving performed by the network device 102 in any of the above methods.

FIG. 7 is a schematic diagram illustrating the structure of a communication device 7100 according to an embodiment of the disclosure. The communication device 7100 may be a network device (e.g., an access network device, a core network device, etc.), a terminal (e.g., a user device, etc.), a chip, chip system or processor that supports a network device to implement any of the above methods, or a chip, chip system or processor that supports a terminal to implement any of the above methods. The communication device 7100 may be configured to implement the methods described in the above method embodiments, and for the details, reference may be made the description in the above method embodiments.

As illustrated in FIG. 7, the communication device 7100 includes one or more processors 7101. The processor 7101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal device, a terminal device chip, a DU or a CU), execute a program, and process the data of the program. The processor 7101 is configured to call instructions such that the communication device 7100 performs any of the above methods.

In some embodiments, the communication device 7100 further includes one or more memories 7102 for storing instructions. For example, all or some of memories 7102 may also be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. For example, the terms such as "transceiver," "transceiver unit," "transceiver machine" and "transceiver circuit" may be replaced with each other. The terms such as "transmitter," "transmission unit," "transmitter machine" and "transmission circuit" may be replaced with each other. The terms such as "receiver," "receiving unit," "receiver machine" and "receiving circuit" may be replaced with each other.

For example, the communication device 7100 further includes one or more interface circuits 7104, which are connected to the memory 7102. The interface circuit 7104 may be configured to receive signals from the memory 7102 or other devices and may be configured to send signals to the memory 7102 or other devices. For example, the interface circuit 7104 may read instructions stored in the memory 7102 and send the instructions to the processor 7101.

The communication device 7100 according to the above embodiments may be a network device or a terminal, but the scope of the communication device 7100 according to the disclosure is not limited thereto, and the structure of the communication device 7100 may not be limited by FIG. 7. The communication device may be an independent device or may be part of a larger device. For example, the communication device may be: 1) an independent integrated circuit IC, or a chip, or a chip system or subsystem; (2) an IC collection including one or more ICs, for example, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, or the like; (6) others.

**FIG.** 8 is a schematic diagram illustrating a structure of a chip 8100 according to an embodiment of the disclosure. In the case where the communication device 7100 may be a chip or a chip system, reference may be made to the schematic diagram of the structure of the chip 8100 illustrated in FIG. 8, but the disclosure is not limited thereto.

The chip 8100 includes one or more processors 8101, and the processor 8101 is configured to call instructions so that the chip 8100 performs any of the above methods.

**In** some embodiments, the chip 8100 further includes one or more interface circuits 8102, which are connected to the memory 8103. The interface circuit 8102 may be configured to receive signals from the memory 8103 or other devices, and the interface circuit 8102 may be performed to send signals to the memory 8103 or other devices. For example, the interface circuit 8102 may read instructions stored in the memory 8103 and send the instructions to the processor 8101. For example, the terms such as "interface circuit," "interface," "transceiver pin" and "transceiver" may be replaced with each other.

**In** some embodiments, the chip 8100 further includes one or more memories 8103 for storing instructions. For example, all or some of memories 8103 may be outside the chip 8100.

The disclosure also provides a storage medium, on which instructions are stored, and when the instructions are executed on the communication device 7100, the communication device 7100 performs any of the above methods. For example, the storage medium is an electronic storage medium. For example, the storage medium is, but is not limited to, a computer-readable storage medium, and it may also be a storage medium readable by other devices. For example, the storage medium may be, but is not limited to, a non-transitory storage medium, and it may also be a temporary storage medium.

The disclosure also provides a program product, and when the program product is executed by the communication device 7100, the communication device 7100 performs any of the above methods. For example, the program product is a computer program product.

The disclosure also provides a computer program, which, when executed on a computer, enables the computer to perform any one of the above methods.

## Claims

1. A positioning measurement method, performed by a terminal, the method comprising:
determining positioning reference signal(s) (PRS) or PRS set(s) for bandwidth aggregation for positioning measurement.

2. The method of claim 1, further comprising:
receiving first information, wherein the first information is configured to indicate PRS(s) or PRS set(s) expected for bandwidth aggregation,
wherein determining the PRS(s) or the PRS set(s) for bandwidth aggregation for positioning measurement comprises:
determining the PRS(s) or the PRS set(s) for bandwidth aggregation for positioning measurement based on the PRS(s) or the PRS set(s) expected for bandwidth aggregation.

3. The method of claim 2, wherein determining the PRS(s) or the PRS set(s) for bandwidth aggregation for positioning measurement based on the PRS(s) or the PRS set(s) expected for bandwidth comprises:
determining the PRS(s) or the PRS set(s) expected for bandwidth aggregation as the PRS(s) or the PRS set(s) for bandwidth aggregation for positioning measurement.

4. The method of claim 2, wherein the PRS(s) or the PRS set(s) expected for bandwidth aggregation comprise at least one of: muted PRS(s) or muted PRS set(s), dropped PRS(s) or dropped PRS set(s), unmuted PRS(s) or unmuted PRS set(s), or non-dropped PRS(s) or non-dropped PRS set(s),
determining the PRS(s) or the PRS set(s) for bandwidth aggregation for positioning measurement based on the PRS(s) or the PRS set(s) expected for bandwidth aggregation comprises:
determining at least one of the unmuted PRS(s) or unmuted PRS set(s) or the non-dropped PRS(s) or non-dropped PRS set(s) among the PRS(s) or the PRS set(s) expected for bandwidth aggregation as the PRS(s) or the PRS set(s) for bandwidth aggregation for positioning measurement.

5. The method of any one of claims 1 to 4, further comprising:
performing the positioning measurement on the determined PRS(s) or the PRS set(s) for bandwidth aggregation for positioning measurement.

6. The method of claim 5, further comprising:
reporting second information, wherein the second information indicates a positioning measurement result of performing the positioning measurement.

7. The method of claim 6, wherein the second information indicates the PRS(s) or the PRS set(s) for bandwidth aggregation for positioning measurement.

8. The method of claim 7, wherein the second information indicates positioning frequency layer information, and
the positioning frequency layer information indicates the PRS(s) or the PRS set(s) for bandwidth aggregation for positioning measurement.

9. The method of claim 6, wherein the second information indicates whether to perform the positioning measurement based on PRS(s) or PRS set(s) expected for bandwidth aggregation.

10. The method of any one of claims 1 to 9, further comprising: receiving third information, wherein the third information indicates whether the PRS(s) or the PRS set(s) allows the terminal to perform the bandwidth aggregation for the positioning measurement.

11. The method of any one of claims 1 to 10, further comprising:
not performing the positioning measurement on the determined at least one of unmuted PRS(s) or PRS set(s) or non-dropped PRS(s) or PRS set(s) among the PRS(s) or the PRS set(s) expected for bandwidth aggregation.

12. The method of claim 2, wherein the first information indicates one or more lists, and the one or more lists comprise the PRS(s) or the PRS set(s) expected for bandwidth aggregation.

13. The method of claim 2, wherein the first information indicates one or more identifiers, and the PRS(s) or the PRS set(s) expected for bandwidth aggregation have the same identifier.

14. A positioning measurement method, performed by a network device, the method comprising:
sending first information, wherein the first information is used by a terminal to determine positioning reference signal(s) (PRS) or PRS set(s) for bandwidth aggregation for positioning measurement.

15. The method of claim 14, wherein the first information indicates PRS(s) or PRS set(s) expected for bandwidth aggregation, and
the PRS(s) or the PRS set(s) for bandwidth aggregation for positioning measurement is determined based on the PRS(s) or the PRS set(s) expected for bandwidth aggregation.

16. The method of claim 15, wherein the PRS(s) or the PRS set(s) for the bandwidth aggregation for positioning measurement is the PRS(s) or the PRS set(s) expected for bandwidth aggregation.

17. The method of claim 15, wherein the PRS(s) or the PRS set(s) expected for bandwidth aggregation comprise at least one of: muted PRS(s) or PRS set(s), dropped PRS(s) or PRS set(s), unmuted PRS(s) or PRS set(s), or non-dropped PRS(s) or PRS set(s),
the PRS(s) or the PRS set(s) for bandwidth aggregation for positioning measurement is at least one of the unmuted PRS(s) or PRS set(s) or the non-dropped PRS(s) or PRS set(s) among the PRS(s) or the PRS set(s) expected for bandwidth aggregation.

18. The method of any one of claims 14 to 17, wherein the positioning measurement is performed on the determined PRS(s) or the PRS set(s) for bandwidth aggregation for positioning measurement.

19. The method of claim 18, further comprising:
receiving second information, wherein the second information indicates a positioning measurement result of performing the positioning measurement.

20. The method of claim 19, wherein the second information indicates the PRS(s) or the PRS set(s) for bandwidth aggregation for positioning measurement.

21. The method of claim 18, wherein the second information indicates positioning frequency layer information, and the positioning frequency layer information indicates the PRS(s) or the PRS set(s) for bandwidth aggregation for positioning measurement.

22. The method of claim 18, wherein the second information indicates whether to perform the positioning measurement based on the PRS(s) or the PRS set(s) expected for bandwidth aggregation.

23. The method of claims 14 to 22, further comprising:
sending third information, wherein the third information indicates whether to the PRS(s) or the PRS set(s) allows the terminal to perform the bandwidth aggregation for the positioning measurement.

24. The method of claims 14 to 23, wherein the positioning measurement is not performed on the determined at least one of unmuted PRS(s) or PRS set(s) or non-dropped PRS(s) or PRS set(s) among PRS(s) or PRS set(s) expected for bandwidth aggregation.

25. The method of claim 15, wherein the first information indicates one or more lists, and the one or more lists comprise the PRS(s) or the PRS set(s) expected for bandwidth aggregation.

26. The method of claim 15, wherein the first information indicates one or more identifiers, and the PRS(s) or PRS set(s) expected for bandwidth aggregation have the same identifier.

27. A positioning measurement method, performed by a communication system, the method comprising:
sending first information by a network device to a terminal, wherein the first information is used by the terminal to determine positioning reference signal(s) (PRS) or PRS set(s) for bandwidth aggregation for positioning measurement;
determining the PRS(s) or the PRS set(s) for bandwidth aggregation for positioning measurement by the terminal.

28. A first positioning measurement apparatus, comprising:
a processing module, configured to determine positioning reference signal(s) (PRS) or PRS set(s) for bandwidth aggregation for positioning measurement.

29. A second positioning measurement apparatus, comprising:
a sending module, configured to send first information, wherein the first information is used by a terminal to determine positioning reference signal(s) (PRS) or PRS set(s) for bandwidth aggregation for positioning measurement.

30. A communication device, comprising:
one or more processors,
wherein the one or more processors are configured to call instructions to enable the communication device to perform the positioning measurement method of any one of claims 1 to 13 and 14 to 26.

31. A communication system, comprising a terminal and a network device, wherein the terminal is configured to implement the positioning measurement method of any one of claims 1 to 13, and the network device is configured to implement the positioning measurement method of any one of claims 14 to 26.

32. A storage medium having instructions stored therein, wherein when the instructions are executed on a communication device, the communication device performs the positioning measurement method of any one of claims 1 to 13 and 14 to 26.
